# NEUE EUROPÄISCHE PATENTSCHRIFT

(11) **EP 0 275 254 B2**
(45) Veröffentlichungstag und Bekanntmachung des Hinweises auf die Entscheidung über den Einspruch: **27.07.1994**
(45) Hinweis auf die Patenterteilung: 29.11.1989
(21) Anmeldenummer: 86905226.6
(22) Anmeldetag: 18.09.1986
(51) Int. Cl.: G06K 15/12

(54) **ELEKTROFOTOGRAFISCHER DRUCKER MIT EINER BELICHTUNGSENERGIE-KORREKTUREINRICHTUNG FÜR DEN OPTISCHEN ZEICHENGENERATOR**
ELECTRO-PHOTOGRAPHIC PRINTER WITH AN EXPOSURE ENERGY CORRECTION DEVICE FOR THE OPTICAL CHARACTER GENERATOR
IMPRIMANTE ELECTROPHOTOGRAPHIQUE MUNIE D'UNE INSTALLATION DE CORRECTION DE L'ENERGIE D'EXPOSITION POUR UN GENERATEUR OPTIQUE DE CARACTERES

(30) Priorität: 26.09.1985 DE 3534338
(43) Veröffentlichungstag der Anmeldung: 27.07.1988
(73) Patentinhaber: SIEMENS AKTIENGESELLSCHAFT, 80333 München (DE)
(72) Erfinder: CREUTZMANN, Edmund, D-8000 München 60 (DE); MAIER, Manfred, D-8000 München 45 (DE)
(86) Internationale Anmeldenummer: DE8600378
(87) Internationale Veröffentlichungsnummer: WO8702162

(56) Entgegenhaltungen:
- DE-A- 3 422 907
- GB-A- 2 104 266
- JP-A-59 202 879
- JP-A-60 107 373
- JP-A-60 131 269
- US-A- 3 828 356
- US-A- 3 832 488
- US-A- 3 850 517
- US-A- 3 988 742
- US-A- 4 435 064
- US-A- 4 455 562
- US-A- 4 479 221

## Beschreibung

Die Erfindung betrifft eine elektrofotografische Druckeinrichtung gemäß dem Oberbegriff des Patentanspruches 1.

Nach dem Prinzip der Elektrofotografie arbeitende Druckeinrichtungen enthalten optische Zeichengeneratoren. Diese optischen Zeichengeneratoren haben die Aufgabe, die in Form von elektronischen Daten vorliegende Druckinformation in ein optisches Bild umzusetzen, mit dem dann eine fotoleitende Schicht, z.B. einer Fotoleitertrommel, belichtet wird. Danach wird das belichtete Bild in bekannter Weise entwickelt und z. B. auf Papier umgedruckt.

Von Vorteil sind optische Zeichengeneratoren, die zeilenartig aufgebaut sind, da diese ohne mechanische Bewegung arbeiten. Bei dieser Art der Zeichengenerierung muß für jeden Punkt, der innerhalb einer Zeile abgebildet werden soll, eine eigene separate Lichtquelle vorhanden sein. Die Anzahl der Lichtquellen ist dadurch sehr groß (mehrere 1000). Alle Lichtquellen müssen die fotoleitende Schicht mit der gleichen Lichtenergie belichten, damit im Ergebnis eine optimale Qualität des Schriftbildes erreicht wird. Als Lichtquellen werden vorzugsweise Leuchtdioden eingesetzt. Diese haben die nachteilige Eigenschaft, daß die Lichtausbeute der einzelnen Leuchtdioden stark schwankt. Um hohen Qualitätsansprüchen gerecht zu werden, müssen die einzelnen Leuchtdioden in geeigneter Weise korrigiert, d. h. individuell angesteuert werden, so daß die abgegebene Lichtenergie pro Belichtungspunkt auch bei unterschiedlicher Lichtausbeute annähernd gleich ist.

Derartige Korrekturverfahren sind allgemein bekannt. So wird in der DE-OS 32 30 226 ein Verfahren und eine Vorrichtung zur Steuerung eines Leuchtdiodenfeldes in einem berührungsfreien Drucker, z. B. elektrofotografischen Drucker, beschrieben, bei dem die Leuchtdioden zur Erzeugung eines Bildes auf einem Fotoleiter verwendet werden.

Jede einzelne Leuchtdiode wird dabei einmal vor Inbetriebnahme der Druckeinrichtung im voraus abgeglichen und in einem Festspeicher (PROM) in Stufen digital gespeichert.

Der Abgleich geschieht dadurch, daß ein Fotoelement die von jedem Leuchtelement auf den Aufzeichnungsträger übertragene Strahlenleistung erfaßt und einer mit den Leuchtelementen gekoppelten Steuereinrichtung in Form von elektrischen Signalen zuführt, und daß dann die Steuereinrichtung jedem Leuchtelement eine individuelle Betätigungszeit derart zuordnet und speichert, daß jedes Leuchtelement bei Betätigung dieselbe Strahlungsenergie liefert.

Es wird weiters in der DE-OS 34 22 907 ein Punktedrucker beschrieben. Der Punktedrucker hat einen Leuchtdiodenanordnungsdruckkopf mit einer Anordnung aus Leuchtdioden mit Treiberstufen für das unabhängige Betreiben der Leuchtdioden und Zeitsteuerschaltungen für das Steuern der Einschaltzeiten oder der Abschaltzeiten der Leuchtdioden durch die Ansteuerung der Treiberstufen entsprechend den Bilddaten und Korrekturdaten, die in einem Speicher gespeichert sind. Die Leuchtdioden können in Blöcke aufgeteilt sein, welche aufeinanderfolgend angesteuertwerden können. Damit werden Abweichungen hinsichtlich mechanischer und elektrischer Eigenschaften der Leuchtdioden korrigiert, so daß die Erzeugung eines Bildes hoher Auflösung und eines Halbtonbildes möglich ist.

Um im Ablauf der Zeit hervorgerufene Änderungen an dem Druckkopf bzw. seiner Bauelemente zu korrigieren, können der Korrekturdaten mehrmals im Laufe der Betriebszeit modifiziert werden.

Die Lichtausbeute von Leuchtdioden schwankt nicht nur bei der Herstellung, sondern sie ändert sich zusätzlich mit zunehmender Alterung in nicht vorhersehbarer Weise. Hinzukommt eine hohe Temperaturabhängigkeit der Lichtleistung.

Aus der US-A1-4 479 221 ist ein Verfahren und eine Vorrichtung zum Regeln der Lichtmenge eines aus Laserdioden bestehenden Arrays bekannt, bei dem über eine Vielzahl von CCD-Fotoelemente die Rückwärtsstrahlen der einzelnen Laserdioden erfaßt und in Abhängigkeit davon die Spitzenleistung der Laserdioden abgeglichen wird.

Technologiebedingt ist bei Laserdioden eine beständige Regelung der Spitzenleistung während deren Betrieb notwendig und zwar unabhängig davon, ob ein Abgleich vorgenommen wird oder nicht. Über den Rückwärtsstrahlen-Sekundäreffekt kann weiterhin eine alterungs- und betriebsbedingte Änderung der Lichtmenge der Laserdioden-Schreibstrahlen und damit der Lichtenergie auf dem Aufzeichnungsträger nur unzureichend erfaßt werden, da Einflüße auf die Schreibstrahlerzeugung und die optische Strecke unberücksichtigt bleiben.

Aufgabe der Erfindung ist es deshalb für eine elektrofotografische Druckeinrichtung der eingangs genannten Art eine Belichtungskorrektureinrichtung für den optischen Zeichengenerator bereitzustellen, die so ausgestaltet ist, daß der Zeichengenerator ohne Veränderung der Hardware bei unterschiedlichsten Betriebsbedingungen eingesetzt werden kann.

Diese Aufgabe wird bei einer elektrofotografischen Druckeinrichtung der eingangs genannten Art gemäß dem kennzeichnenden Teil des ersten Patentanspruches gelöst. Vorteilhafte Ausführungsformen der Erfindung sind in den Unteransprüchen gekennzeichnet.

Die Erfindung ermöglicht in vorteilhafter Weise eine Korrektur der Lichtleistung der Leuchtelemente während der Betriebszeit des Druckers durch einen automatischen Abgleich, wobei auch die unterschiedlichen Betriebsbedingungen bzw. Betriebsparameter des Druckers wie Geschwindigkeit des Aufzeichnungsträgers, Temperatur der Leuchtelemente und der Alterungszustand berücksichtigt werden.

In Verbindung mit der einstellbar ausgestalteten Kompensationsanordnung ergibt sich eine hohe Flexibilität des Zeichengenerators bei unterschiedlichsten Einsatzmöglichkeiten.

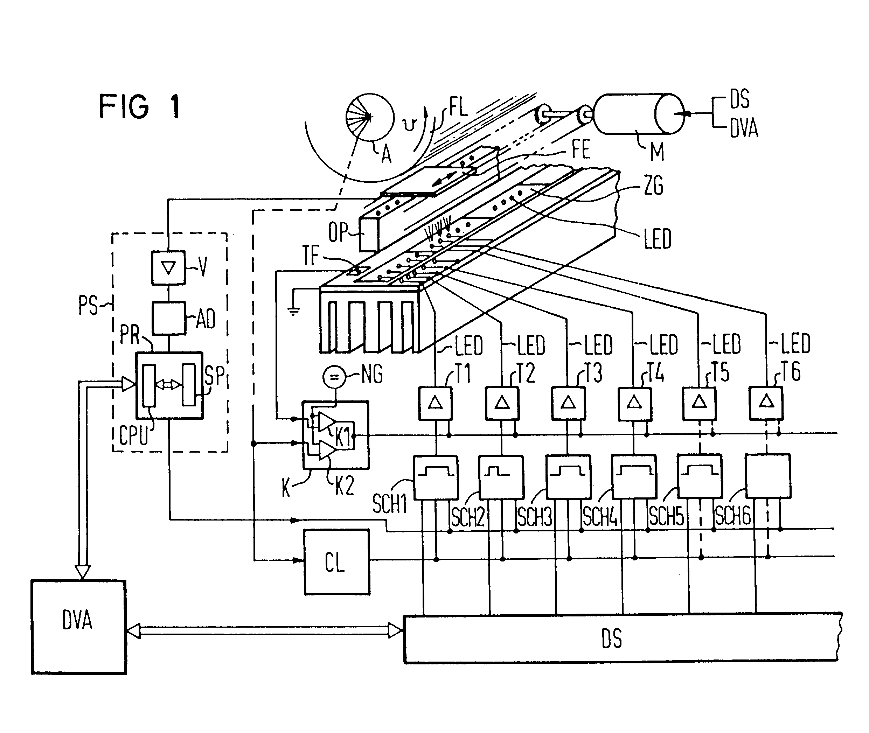

Ausführungsform der Erfindung sind in den Zeichnungen dargestellt und werden im folgenden beispielsweise näher beschrieben. Es zeigen
Figur 1 eine schematische Darstellung in Form eines Blockschaltbildes einer Belichtungskorrektureinrichtung in einer elektrofotografischen Druckeinrichtung mit elektromotorisch bewegtem Fotoelement und
Figur 2 eine schematische Darstellung eines optischen Zeichengenerators, bei dem das für die Belichtungskorrektur erforderliche Fotoelement verschwenkbar ausgestaltet ist.

In einem hier nicht im einzelnen dargestellten nach dem elektrofotografischen Prinzip arbeitenden Drucker ist ein optischer Zeichengenerator angeordnet, der zeilenartig aufgebaut ist, und der eine Vielzahl von einzeln erregbaren Leuchtdioden aufweist. Angesteuert von einer Ansteuereinrichtung, wie sie z. B. in der DE-OS 34 22 907 beschrieben ist, werden durch Erregung der Einzelleuchtdioden LED des Zeichengenerators ZG auf einer mit der Geschwindigkeit v umlaufenden Fotoleitertrommel FL in bekannter Weise über eine selbst fokussierende Optik OP auf einer Fotoleiterschicht der Fotoleitertrommel FL Bildzeichen erzeugt, die dann in hier nicht dargestellter Weise in einer Entwicklerstation entwickelt und in einer Umdruckstation auf Endlospapier übertragen werden. Der darzustellende Text wird dabei von einer zentralen Datenverarbeitungsanlage DVA der Druckersteuerung DS zugeführt.

Die sich aus einzelnen Punkten zusammensetzenden Bilderzeichen werden durch Erregung der LED des Zeichengenerators auf der Fotoleitertrommel zeilenweise erzeugt und zwar dadurch, dass das von den einzelnen LED ausgehende und durch die Optik OPfokussierteStrahtungsbündet jeder LED die vorgeladene Oberfläche der Fotoleitertrommel punktförmig entlädt und dadurch ein dem darzustellenden Zeichenbild entsprechendes Ladungsbild hervorruft.

Zur Erzeugung eines Zeichenpunktes ist eine Mindeststrahlungsenergie der LED erforderlich und damit eine Mindestbetätigungszeit (Einschaltzeit) der LED. Da die Fotoleitertrommel sich im Druckbetrieb kontinuierlich dreht, führt die endliche Betätigungszeit der LED zu einer ovalen Verformung eines kreisförmigen Bildpunktes. Der zur Erzeugung eines klaren Schriftbildes noch tolerierbare Formungsgrad des einzelnen Bildpunktes begrenzt dabei unter anderem die Drehgeschwindigkeit der Fotoleitertrommel. Bezeichnet man mit T die dem Mindestabstand zwischen zwei Schreibzeilen (Mikrodines) bei maximal möglicher Schreibgeschwindigkeit (Drehgeschwindigkeit der Trommel) proportionale Zeit, so bewegt sich die erforderliche Betätigungszeit der LED zwischen % und ¹/₂ T. Dabei kann das Schriftbild auf der Fotoleitertrommel FL sowohl positiv als auch negativ erzeugt werden, was bedeutet, dass ein Zeichenpunkt sich entweder durch Einschalten oder durch Ausschalten der Leuchtdioden erzeugen lässt, Der im folgenden benutzte Begriff « Betätigungszeit » wird dabei sowohl fürdie Einschaltzeit als auch für die Ausschaltzeit benutzt.

Es hat sich nun herausgestellt, dass die von einer LED abgebene Lichtleistung nicht nur von den elektrischen Ansteuerwerten Strom und Spannung abhängt, sondern auch von dem Alterungszustand der LED und der Betriebstemperatur. Die Lichtleistung der einzelnen LED untereinander schwankt dabei beträchtlich. Um diese unterschiedliche Lichtleistung der einzelnen LED im Zeichengenerator ZG ausgleichen zu können, weist die Druckereinrichtung eine Korrekturvorrichtung auf.

Die Korrekturvorrichtung enthält dabei ein Fotoleiterelement FE, das in der Nähe der Oberfläche der Fotoleitertrommel hinter der Fokussierungsoptik OP angeordnet ist. Dieses Fotoelement FE ist mit einem Elektromotor M gekoppelt, der bei Aufruf einer Abgleichroutine z. B. über die Druckersteuerung DS oder über die zentrale Datenverarbeitungsanlage DVAdas Fotoelement FE zeilenweise überdie Fokussierungsoptik OP hinweg bewegt. Gleichzeitig werden über die zentrale Drukkersteuerung DS die einzelnen Leuchtdioden LED des Zeichengenerators ZG erregt. Die von den einzelnen Leuchtdioden ausgehende Lichtleistung unter Berücksichtigung der gesamten Übertragungsstrecke einschliesslich der Fokussierungsoptik OP, erzeugt am Ausgang des Fotoelementes FE ein entsprechendes elektrisches Signal, das aus einer mit dem Fotoelement FE gekoppelten programmgesteuerten Einrichtung PS zugeführt wird. Die programmgesteuerte Einrichtung enthält einen Verstärker V mit nachgeschaltetem Anaiog-/DigitaiwandierAD zum Umsetzen des analogen, der Lichtenergie entsprechenden, Signales in ein digitales Signal. Ein Mikroprozessor PR, derz. B. einen Siemens Baustein 8080 enthalten kann, enthält eine Zentraleinheit CPU mit zugeordneter Speichereinheit SP. Der Mikroprozessor PR erfasst über die Zentraleinheit CPU die der Strahlungsleistung der LED entsprechenden Signale und speichert sie in der Reihenfolge ihrer Abtastung im Speicher SP ab. Aus der so gemessenen Strahlungsleistung der einzelnen LED kann nun durch Zuordnung einer den individuellen Strahlungsleistungen der einzelnen LED angepassten Betätigungszeit eine einheitliche für alle LED gleichmässige Strahlungsenergie erzeugt werden. Zu diesem Zweck ordnet der Mikroprozessor PR den einzelnen im Speicher SP gespeicherten Einzelleistungen der LED individuelle Betätigungszeiten zu und speichert diese Betätigungszeit in den der Druckersteuerung DS zugeordneten, einzeln mit den LED verschalteten Schaltzeitspeichern SCH1 bis SCHn. Die Schaltzeitspeicher SCH1 bis SCHn können auch Teil eines gemeinsamen grösseren Speichers sein.

Weiterhin weist die Korrekturvorrichtung eine Kompensationsanordnung K auf, die über entsprechende Fühlelemente die Betriebsparameter der Druckereinrichtung, z. B. Geschwindigkeit v des Aufzeichnungsträgers FL, Betriebstemperatur TF der Leuchtelemente LED erfasst und abhängig davon die elektrischen Normbetriebsparameter, Spannung-und Stromstärke für sämtliche Leuchtelemente LED einheitlich festlegt und über Treiberstufen T1 bis Tn den LED zuführt. Zur Erfassung der Geschwindigkeit v der Fotoleitertrommel FL befindet sich an der Fotoleitertrommel FL eine in bekannter Weise ausgestaltete Abtasteinrichtung A und zur Erfassung der Temperatur ein Temperaturfühlelement TF auf dem die LED aufnehmenden Träger. Sowohl derAbtasterAals auch das Temperaturfühlelement TF liefern an die Kompensationsanordnung eine den gemessenen Grössen entsprechende Spannung, die an den Komparatoren K1 und K2 mit einer von aussen zugeführten einstellbaren Normgleichspannung NG verglichen wird und abhängig von diesem Vergleichsvorgang dann den Ansteuerstrom bzw. die Ansteuerspannung für die Treiberstufen T1 bis Tn festgelegt. Die Kompensationsanordnung K lässt sich auch gesondert einstellen, z. B. durch Variation der Normgleichspannung NG und unabhängig von deren Betriebsparametern. Das von dem Abtaster gelieferte, der Drehgeschwindigkeit v proportionale Abtastsignal wird gleichzeitig auch einer Takteinrichtung CL zugeführt. In Verbindung mit einem von dieser Takteinrichtung CL gelieferten Taktsignal steuert die zentrale Druckersteuerung DSdie LED's des Zeichengenerators ZG Mikrozeile für Mikrozeile an.

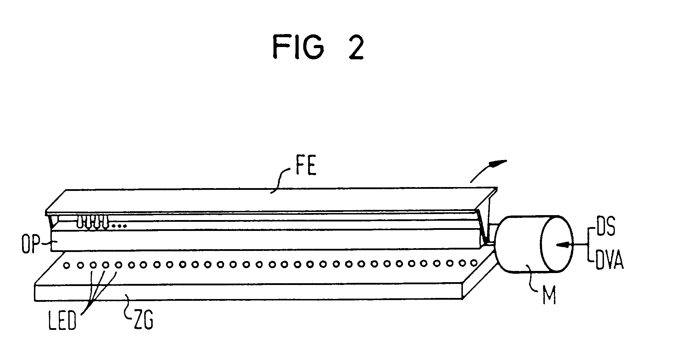

Entsprechend der Darstellung der Fig. 2 ist es auch möglich, anstelle eines einzelnen ca. drei Fasern der Fokussieroptik OP überdeckenden über einen Motor M bewegten Fotoelementes FE das Fotoelement so gross auszugestalten, dass es die gesamte Breite der Fokussieroptik OP und damit des Zeichengenerators ZG überdeckt. Das Fotoelement FE kann dabei an der Fokussieroptik OP oder an dem Zeichengenerator ZG schwenkbar befestigt sein und wird dann mit Hilfe eines Elektromotors M oder z. B. eines Elektromagneten bei Aufruf einer Abtastroutine in den Strahlengang der Leuchtdioden LED verschwenkt.

## Patentansprüche

1. Elektrofotografische Druckeinrichtung, bei der mit Hilfe einer Vielzahl von Leuchtdioden (LED) eines optischen Zeichengenerators (ZG) auf einem Aufzeichnungsträger (FL) ein aus Einzelpunkten zusammengesetztes Bild erzeugt wird, und bei dem den Leuchtdioden (LED) eine Korrektureinrichtung zugeordnet ist, die durch Steuerung der Einschaltzeit der Leuchtdioden durch Abruf einer individuell korrigierbaren Betätigungszeit aus einem Speicher, die Leuchtdioden (LED) abgleicht, dadurch gekennzeichnet, daß die Korrekturvorrichtung derart ausgestaltet ist, daß bei Aufruf einer Abgleichroutine ein automatischer Abgleich der Leuchtdioden (LED) dadurch erfolgt, daß ein mit einer elektromotorischen Einrichtung (M) gekoppeltes Fotoelement (FE) in den Strahlungsbereich jeder der Leuchtdioden (LED) derart bewegt wird, daß das Fotoelement (FE) die von jeder Leuchtdiode (LED) bei vorgebbaren Normbetriebsparametern auf den Aufzeichnungsträger (FL) übertragene Strahlungsleistung erfaßt und einer mit den Leuchtdioden (LED) gekoppelten Steuereinrichtung (PS) in Form von elektrischen Signalen zuführt, und daß dann die Steuereinrichtung (PS) jeder Leuchtdiode (LED) eine individuelle Betätigungszeit derart zuordnet, und in einem Schaltzeitspeicher (SCH1 bis SCHn) abspeichert, daß jede Leuchtdiode (LED) bei Betätigung an den Aufzeichnungsträger (FL) dieselbe Strahlungsenergie liefert, wobei eine mit sämtlichen Leuchtdioden (LED) gekoppelte einstellbar ausgestaltete Kompensationsanordnung (K) die Betriebsparameter der Druckeinrichtung z. B. Geschwindigkeit des Aufzeichnungsträgers (v), Betriebstemperatur der Leuchtdioden (TF) erfaßt und in Abhängigkeit davon die elektrischen Normbetriebsparameter (Spannung, Strom) für sämtliche Leuchtdioden (LED) einheitlich festlegt.

2. Elektrofotografische Druckeinrichtung nach Anspruch 1 , dadurch gekennzeichnet, daß einem die Leuchtdioden (LED) aufnehmenden Trägerelement (ZG) eine mit der Kompensationsanordnung (K) gekoppelte Temperaturfühleinrichtung (TF) zugeordnet ist.

3. Elektrofotografische Druckeinrichtung nach Anspruch 1, dadurch gekennzeichnet, daß das Fotoelement (FE) kleinflächig ausgestaltet ist und über die elektromotorische Einrichtung (M) hintereinander durch den Strahlungsbereich der Leuchtdioden (LED) bewegt wird.

4. Elektrofotografische Druckeinrichtung nach Anspruch 1, dadurch gekennzeichnet, daß das Fotoelement (FE) derart großflächig ausgebildet ist, daß es den Strahlungsbereich sämtlicher Leuchtdioden (LED) erfaßt.

5. Elektrofotografische Druckeinrichtung nach Anspruch 4, dadurch gekennzeichnet, daß das Fotoelement (FE) verschwenkbar ausgebildet ist.

## Claims

1. Electrophotographic printing device, in which an image composed of individual dots is generated on a recording medium (FL) with the aid of a plurality of light-emitting diodes (LED) of an optical character generator (ZG), and in which there is associated with the light-emitting diodes (LED) a correction device which equalizes the light-emitting diodes (LED) by controlling the on period of the light-emitting diodes by retrieving an individually correctable operating time from a memory, characterized in that the correction device is designed such that, when an equalizing routine is called, an automatic equalization of the light-emitting diodes (LED) is carried out in that a photoelement (FE) coupled to an electromotive device (M) is moved into the radiation range of each of the light-emitting diodes (LED) in such a way that the photoelement (FE) records the radiant power transmitted from each light-emitting diode (LED) onto the recording medium (FL), with given standard operating parameters, and feeds it to a control device (PS) coupled to the light-emitting diodes (LED) in the form of electrical signals, and in that the control device (PS) then assigns each light-emitting diode (LED) an individual operating time, and stores it in a switching time memory (SCHI to SCHn), in such a manner that, when operated, each light-emitting diode (LED) supplies the same radiant energy to the recording medium (FL), a compensating arrangement (K) of adjustable design which is coupled to all the light-emitting diodes (LED) recording the operating parameters of the printing device, for example speed of the recording medium (v), operating temperature of the light-emitting diodes (LED), and in dependence thereon uniformly defining the electrical standard operating parameters (voltage, current) for all the light-emitting diodes (LED).

2. Electrophotographic priniting device according to Claim 1, characterized in that a temperature sensing device (TF) coupled to the compensating arrangement (K) is associated with a carrier element (ZG) receiving the light-emitting diodes (LED).

3. Electrophotographic printing device according to Claim 1, characterized in that the photoelement (FE) is of small-area design and is moved by means of the electromotive device (M) successively through the radiation range of the light-emitting diodes (LED).

4. Electrophotographic printing device according to Claim 1, characterized in that the photoelement (FE) is of such large-area design that it records the radiation range of all the light-emitting diodes (LED).

5. Electrophotographic printing device according to Claim 4, characterized in that the photoelement (FE) is of pivotable design.

## Revendications

1. Dispositif d'impression électrophotographique, dans lequel une image composée de points individuels est produite à l'aide d'une multiplicité de diodes à luminescence (LED) d'un générateur optique de caractères (ZG) sur un support d'enregistrement (FL), et dans lequel aux diodes à luminescence (LED) est associé un dispositif de correction qui, en commandant la durée de branchement des diodes à luminescence, équilibre les diodes à luminescence (LED), en appelant dans une mémoire un temps d'excitation pouvant être corrigé individuellement, caractérisé par le fait que le dispositif de correction est agencé de telle sorte que, lors de l'appel d'un sous- programme d'équilibrage, un équilibrage automatique des diodes à luminescence (LED) a lieu par le fait qu'un élément photosensible (FE), couplé à un dispositif à moteur électrique (M), est amené dans la zone de rayonnement de chacune des diodes à luminescence (LED) de telle sorte que l'élément photosensible (FE) détecte la puissance de rayonnement, qui, pour des paramètres de fonctionnement répondant à une norme et pouvant être donnés à l'avance, est transmise par chaque diode à luminescence (LED) au support d'enregistrement (FL), et l'envoie à un dispositif de commande (PS) couplé aux diodes à luminescence (LED), sous la forme de signaux électriques, et que le dispositif de commande (PS) affecte alors à chaque diode à luminescence (LED) une durée d'excitation individuelle, et la mémorise dans une mémoire de durées de commutation (SCH1 à SCHn), de telle sorte que chaque diode à luminescence (LED) fournit, au support d'enregistrement (FL), lorsqu'elle est excitée, la même énergie de rayonnement, un dispositif de compensation (K) agencé de manière à être réglable et couplé à toutes les diodes à luminescence (LED) détectant les paramètres de fonctionnement du dispositif d'impression, par exemple la vitesse (v) du support d'enregistrement, la température de fonctionnement des diodes à luminescence (TF), et, en fonction de cela, fixant de façon uniforme les paramètres électriques de fonctionnement répondant à une norme (tension et courant) pour toutes les diodes à luminescence (LED).

2. Dispositif d'impression photographique suivant la revendication 1, caractérisé par le fait qu'un dispositif de détection de température (TF), qui est couplé au dispositif de compensation (K), est associé à un support (ZG) de réception des diodes à luminescence (LED).

3. Dispositif d'impression photographique suivant la revendication 1, caractérisé par le fait que l'élément photosensible (FE) a une petite surface et est déplacé successivement, par le dispositif à moteur électrique (M), dans les zones de rayonnement des diodes à luminescence (LED).

4. Dispositif d'impression photographique suivant la revendication 1, caractérisé par le fait que l'élément photosensible (FE) a une grande surface de telle sorte qu'il détecte la zone de rayonnement de l'ensemble des diodes de luminescence (LED).

5. Dispositif d'impression photographique suivant la revendication 4, caractérisé par le fait que l'élément photosensible (FE) est monté basculant.
